# EUROPÄISCHE PATENTSCHRIFT

(11) **EP 1 614 723 B1**
(45) Veröffentlichungstag und Bekanntmachung des Hinweises auf die Patenterteilung: **12.12.2007**
(21) Anmeldenummer: 04016285.1
(22) Anmeldetag: 10.07.2004
(51) Int. Cl.: C09D 5/16, C09D 5/14

(54) **Dispersionen**
Dispersions
Dispersions

(43) Veröffentlichungstag der Anmeldung: 11.01.2006
(73) Patentinhaber: Cognis IP Management GmbH, 40589 Düsseldorf (DE)
(72) Erfinder: Caldero Linnhoff, Gabriela, Dr., 08034 Barcelona (ES); Viladot Petit, Josep-Lluis, Dr., 08018 Barcelona (ES)

(56) Entgegenhaltungen:
- US-A- 253 877
- US-A- 5 173 110
- US-B1- 6 365 066
- DATABASE WPI Section Ch, Week 199723 Derwent Publications Ltd., London, GB; Class A97, AN 1997-255397 XP002307901 & JP 09 087114 A (DAIICHI KOGYO SEIYAKU CO LTD) 31. März 1997 (1997-03-31)

## Beschreibung

### Gebiet der Erfindung

Die Erfindung befindet sich auf dem Gebiet der Lacke und Farben und betrifft neue Dispersionen von mikroverkapselten Wirkstoffen in Lösemitteln, ein Verfahren zu deren Herstellung sowie deren Verwendung zur Herstellung von Anstrichmitteln, insbesondere für den Einsatz unter Wasser.

### Stand der Technik

Werkstoffe sind im Laufe ihrer Nutzung unterschiedlichsten Faktoren ausgesetzt, die ihre Beständigkeit auf eine harte Probe stellen können. Typische Beispiele sind das Zusammenspiel von Wind, Regen und Temperaturunterschieden, die in vergleichsweise kurzer Zeit Felsen sprengen und über Jahrmillionen ganze Gebirge abtragen können. Vom Menschen geschaffene Objekte sind in der Regel nicht darauf ausgelegt, solange Zeiträume zu überdauern, aber auch die Anforderung, 10, 20 oder gar 100 Jahre möglichst unbeschadet zu überstehen, stellt die Werkstoffkunde immer wieder auf die Probe. Eine besonders hohe Anforderung besteht bei der Arbeit unter Wasser im allgemeinen und betrifft die Beständigkeit von Werkstoffen unter dem Einfluss von Meerwasser im besonderen. Hier treffen zwei besonders aggressive Faktoren zusammen : zum einen die Anwesenheit von Mikroorganismen, Bakterien und marinen Kleinstlebewesen und zum anderen die Gegenwart von Salzen. Insbesondere erstere stellen seit Anbeginn der Seefahrt Faktoren dar, denen jeder Schiffsführer stets aufs neue begegnen muss. Während früher der Holzrumpf von Schiffen oder Pfahlbauten mechanisch von Algenbewuchs befreit wurde, vertraut man heute auf besondere Anstriche, sogenannte Anti-Foulingfarben [vgl. EP 0934368 B1 (Bayer), WO 03/008505 (Foster-Miller)]. Handelt es sich bei den Werkstoffen um Stahl oder stahlarmierten Beton, kommt natürlich noch die Gefahr einer verstärkten Korrosion durch das allmähliche Eindringen von Chloridionen hinzu, dem man durch Korrosionsinhibitoren zu begegnen versucht, die man entweder den Anstrichfarben oder dem Beton zusetzt.

Trotz der langjährigen Erfahrung mit dem Schutz von Werkstoffen durch Behandlung oder Ausrüstung mit besonderen Schutzanstrichen, sind die Ergebnisse nach wie vor nicht zufriedenstellend. Insbesondere erweisen sich die Wirkstoffe nicht über einen hinreichend langen Zeitraum chemisch beständig, so dass sie ihre schützende Funktion nicht ausreichend lange ausüben können. Des weiteren erweist sich die stabile Einarbeitung von sehr unterschiedlichen Stoffen, wie beispielweise Anti-Foulingpigmenten und Korrosionsinhibitoren in Farben und Lacken als problematisch.

Demzufolge hat die Aufgabe der vorliegenden Erfindung darin bestanden, Zubereitungen zur Verfügung zu stellen, mit denen sich unterschiedlichste Werkstoffe, wie beispielsweise Holz, Stahl, Beton oder auch stahlarmierter Beton so ausrüsten oder behandeln lassen, dass diese im vergleich zum Stand der Technik über eine verlängerte Resistenz sowohl gegen den Einfluss von Mikroorganismen als auch Korrosionsfaktoren haben, wie man sie typisch bei Bedingungen unter Wasser, speziell im Meerwasser antrifft.

### Beschreibung der Erfindung

Gegenstand der Erfindung sind Dispersionen enthaltend
(a) in einer Gelatinematrix mikroverkapselte Anti-Foulingwirkstoffe und
(b) organische Lösemittel.

Überraschenderweise wurde gefunden, dass sich durch die Mikroverkapselung der Anti-Foulingwirkstoffe und deren Einbringen in organische Lösemittel Dispersionen erzeugen lassen, die als Zusatzstoff herkömmlicher Anstrichfarben, damit beschichteten oder ausgerüsteten Werkstoffen unterschiedlichster Natur eine verbesserte Beständigkeit gegen vielfältige Umwelteinflüsse, speziell unter Wasser und insbesondere im Meerwasser verleihen. Durch die Mikroverkapselung werden die Wirkstoffe einerseits vor einer chemischen Zersetzung bewahrt und zum anderen verzögert freigesetzt, wobei beide Effekte gleichzeitig dem angestrebten Ziel dienen, die Schutzdauer signifikant zu verlängern. Ein weiterer Vorteil besteht darin, dass die Mikrokapseln neben den Anti-Foulingwirkstoffen auch zugleich Korrosionsinhibitoren enthalten können, so dass beide Wirkstofftypen nunmehr ohne Formulierungsschwierigkeiten gleichzeitig eingesetzt werden können. In diesem Zusammenhang hat sich gezeigt, dass Mikrokapseln auf Gelatinebasis unter den vielfältigen in Betracht kommenden Verkapselungssystemen eine besondere Beständigkeit gegenüber Meerwasser aufweisen, was unerwartet war und zu einer deutlichen Präferenz bei der Ausgestaltung der vorliegenden Erfindung führt.

Insbesondere ist der Gegenstand durch Ansprüchen 2-10 definiert.

### Anti-Foulingwirkstoffe

Die Auswahl der Anti-Foulingwirkstoffe richtet sich nach der konkreten Aufgabenstellung - beispielsweise, ob damit ausgerüstete Schiffe in kalten oder tropischen Gewässern verkehren - und ist für sich nicht kritisch. Typischerweise handelt es sich um anorganische Salze bzw. Pigmente und/oder metallorganische Verbindungen. Typische Beispiele sind Wirkstoffe, die als Metallkomponente insbesondere Blei, Eisen, Zinn, Kupfer, Mangan, Arsen, Antimon, Wismut, oder Quecksilber aufweisen, so etwa Kupferthiocyanat, Kupfersulfat, Kupferpyrithion, Zinkethylen(bis)dithiocarbamat, Zinkdimethyldithiocarbamat, Zinkpyrithion, Zinkdiethyldithiocarbamat, Mangandiethyldithiocarbamat, wobei der Einsatz von Oxiden des Kupfers und/oder Eisens bevorzugt ist. Die Teilchen weisen als solche in der Regel einen mittleren Durchmesser < 100 micras (= 0,1 mm) und eine Wasserlöslichkeit von < 100 ppm auf.

### Korrosionsinhibitoren

In einer bevorzugten Ausführungsform der vorliegenden Erfindung enthalten die Mikrokapseln nicht nur Anti-Foulingwirkstoffe, sondern auch zusätzlich noch Korrosionsinhibitoren. Typische Beispiele sind Kondensationsprodukte von Fettsäuren mit 6 bis 22 und vorzugsweise 12 bis 18 Kohlenstoffatomen mit Alkanolaminen, wie beispielsweise Ethanolamin, Propanolamin, Diethanolamin, Dipropanolamin, Triethanolamin, Tripropanolamin und dergleichen. Besonders bevorzugt sind Korrosionsinhibitoren, die frei von freien Aminen sind, wie beispielsweise Kokosfettsäuremonoethanolamin, das unter der Bezeichnung Texamin® KE 3160 (Cognis) im Handel erhältlich ist. Die Einsatzmenge an Korrosionsinhibitoren kann bezogen auf die Anti-Foulingwirkstoffe 1 bis 100, vorzugsweise 5 bis 90 und insbesondere 25 bis 50 Gew.-% betragen.

### Organische Lösemittel

Die Auswahl der organischen Lösemittel ist an sich unkritisch und richtet sich im wesentlichen nach den Vorgaben der verarbeitenden Industrie. In der Regel handelt es sich um aliphatische, cycloaliphatische oder aromatische Kohlenwasserstoffe, wie beispielsweise Toluol, Xylol oder Petroleumdestillate. Besonders bevorzugt sind technische Gemische, wie sie beispielsweise von Brenntag unter der Bezeichnung Varsol® oder Exxon unter der Marke Solvesso® vertrieben werden. Üblicherweise enthalten die Dispersionen die mikroverkapselten Wirkstoffe und die organischen Lösemittel im Gewichtsverhältnis 10 : 90 bis 90 : 10 und vorzugsweise 50 : 50 bis 20 : 80.

### Mikrokapseln und diese enthaltende Dispersionen

Unter den Begriffen "Mikrokapsel" werden vom Fachmann sphärische Aggregate mit einem Durchmesser im Bereich von 0,0001 bis 5 und vorzugsweise 0,005 bis 0,5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, A-garose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon.

Beispiele für Mikrokapseln des Stands der Technik sind folgende Handelsprodukte (in Klammern angegeben ist jeweils das Hüllmaterial) : *Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide). Chitosanmikrokapseln und Verfahren zu ihrer Herstellung sind Gegenstand fiüherer Patenanmeldungen der Patentanmelderin [WO 01/01926, WO 01/01927, WO 01/01928, WO 01/01929].

Wie schon eingangs erläutert, eignet sich für die Verkapselung der Anti-Foulingwirkstoffe sowie gegebenenfalls auch der Korrosionsinhibitoren insbesondere Gelatine, weil die Systeme einerseits einfach herzustellen sind und zum anderen eine überraschende hohe Stabilität gegenüber einer salinen Umgebung aufweisen. Sie lösen sich also nicht nach kurzer Zeit und möglicherweise auch noch spontan auf, sondern geben den Wirkstoff verzögert über einen längeren Zeitraum frei. Vorzugsweise besitzen die Mikrokapseln dabei einen mittleren Durchmesser von 10 bis 150 micras (= 0,1 bis 1,5 mm) auf

Die Herstellung der Dispersionen der mikroverkapselten Wirkstoffe, erfolgt in der Regel dadurch dass man
(a) bei Umgebungstemperatur eine erste Zubereitung aus einem Ölkörper und einem Emulgator herstellt,
(b) bei einer Temperatur im Bereich von 50 bis 100 °C eine zweite wässrige Zubereitung aus Gelatine und den Wirkstoffen herstellt,
(c) die wässrige zweite Zubereitung unter starker Scherung in die erste ölhaltige Zubereitung tropft und anschließend unter den Schmelzpunkt der Gelatine abkühlt,
(d) den so erhaltenen Mikrokapselzubereitungen ein Vernetzungsmittel zusetzt,
(e) die Ölphase abtrennt und schließlich die resultierenden Mikrokapseln in einem organischen Lösungsmittel redispergiert.

### Ölkörper

Als Ölkörper kommen beispielsweise Guerbetalkohole auf Basis von Fettalkoholen mit 6 bis 18, vorzugsweise 8 bis 10 Kohlenstoffatomen, Ester von linearen C₆-C₂₂-Fettsäuren mit linearen oder verzweigten C₆-C₂₂-Fettalkoholen bzw. Ester von verzweigten C₆-C₁₃₋Carbonsäuren mit linearen oder verzweigten C₆-C₂₂-Fettalkoholen, wie z.B. Myristylmyristat, Myristylpalmitat, Myristylstearat, Myristylisostearat, Myristyloleat, Myristylbehenat, Myristylerucat, Cetylmyristat, Cetylpalmitat, Cetylstearat, Cetylisostearat, Cetyloleat, Cetylbehenat, Cetylerucat, Stearylmyristat, Stearylpalmitat, Stearylstearat, Stearylisostearat, Stearyloleat, Stearylbehenat, Stearylerucat, Isostearylmyristat, Isostearylpalmitat, Isostearylstearat, Isostearylisostearat, Isostearyloleat, Isostearylbehenat, Isostearyloleat, Oleylmyristat, Oleylpalmitat, Oleylstearat, Oleylisostearat, Oleyloleat, Oleylbehenat, Oleylerucat, Behenylmyristat, Behenylpalmitat, Behenylstearat, Behenylisostearat, Behenyloleat, Behenylbehenat, Behenylerucat, Erucylmyristat, Erucylpalmitat, Erucylstearat, Erucylisostearat, Erucyloleat, Erucylbehenat und Erucylerucat. Daneben eignen sich Ester von linearen C₆-C₂₂-Fettsäuren mit verzweigten Alkoholen, insbesondere 2-Ethylhexanol, Ester von C₁₈-C₃₈-Alkylhydroxycarbonsäuren mit linearen oder verzweigten C₆-C₂₂-Fettalkoholen, insbesondere Dioctyl Malate, Ester von linearen und/oder verzweigten Fettsäuren mit mehrwertigen Alkoholen (wie z.B. Propylenglycol, Dimerdiol oder Trimertriol) und/oder Guerbetalkoholen, Triglyceride auf Basis C₆-C₁₀-Fettsäuren, flüssige Mono-/Di-/Triglyceridmischungen auf Basis von C₆-C₁₈-Fettsäuren, Ester von C₆-C₂₂-Fettalkoholen und/oder Guerbetalkoholen mit aromatischen Carbonsäuren, insbesondere Benzoesäure, Ester von C₂-C₁₂-Dicarbonsäuren mit linearen oder verzweigten Alkoholen mit 1 bis 22 Kohlenstoffatomen oder Polyolen mit 2 bis 10 Kohlenstoffatomen und 2 bis 6 Hydroxylgruppen, pflanzliche Öle, verzweigte primäre Alkohole, substituierte Cyclohexane, lineare und verzweigte C₆-C₂₂-Fettalkoholcarbonate, wie z.B. Dicaprylyl Carbonate (Cetiol® CC), Guerbetcarbonate auf Basis von Fettalkoholen mit 6 bis 18, vorzugsweise 8 bis 10 C Atomen, Ester der Benzoesäure mit linearen und/oder verzweigten C₆-C₂₂-Alkoholen (z.B. Finsolv® TN), lineare oder verzweigte, symmetrische oder unsymmetrische Dialkylether mit 6 bis 22 Kohlenstoffatomen pro Alkylgruppe, wie z.B. Dicaprylyl Ether (Cetiol® OE), Ringöffnungsprodukte von epoxidierten Fettsäureestern mit Polyolen, Siliconöle (Cyclomethicone, Siliciummethicontypen u.a.) und/oder aliphatische bzw. naphthenische Kohlenwasserstoffe, wie z.B. wie Squalan, Squalen oder Dialkylcyclohexane in Betracht.

### Emulgatoren

Als Emulgatoren für die Ölphase kommen beispielsweise nichtionogene Tenside aus mindestens einer der folgenden Gruppen in Frage:
- Anlagerungsprodukte von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen, an Alkylphenole mit 8 bis 15 C-Atomen in der Alkylgruppe sowie Alkylamine mit 8 bis 22 Kohlenstoffatomen im Alkylrest;
- Alkyl- und/oder Alkenyloligoglykoside mit 8 bis 22 Kohlenstoffatomen im Alk(en)ylrest und deren ethoxylierte Analoga;
- Anlagerungsprodukte von 1 bis 15 Mol Ethylenoxid an Ricinusöl und/oder gehärtetes Ricinusöl;
- Anlagerungsprodukte von 15 bis 60 Mol Ethylenoxid an Ricinusöl und/oder gehärtetes Ricinusöl;
- Partialester von Glycerin und/oder Sorbitan mit ungesättigten, linearen oder gesättigten, verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
- Partialester von Polyglycerin (durchschnittlicher Eigenkondensationsgrad 2 bis 8), Polyethylenglycol (Molekulargewicht 400 bis 5000), Trimethylolpropan, Pentaerythrit, Zuckeralkoholen (z.B. Sorbit), Alkylglucosiden (z.B. Methylglucosid, Butylglucosid, Laurylglucosid) sowie Polyglucosiden (z.B. Cellulose) mit gesättigten und/oder ungesättigten, linearen oder verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
- Mischester aus Pentaerythrit, Fettsäuren, Citronensäure und Fettalkohol und/oder Mischester von Fettsäuren mit 6 bis 22 Kohlenstoffatomen, Methylglucose und Polyolen, vorzugsweise Glycerin oder Polyglycerin.
- Mono-, Di- und Trialkylphosphate sowie Mono-, Di- und/oder Tri-PEGalkylphosphate und deren Salze;
- Wollwachsalkohole;
- Polysiloxan-Polyalkyl-Polyether-Copolymere bzw. entsprechende Derivate;
- Block-Copolymere z.B. Polyethylenglycol-30 Dipolyhydroxystearate;
- Polymeremulgatoren, z.B. Pemulen-Typen (TR-1,TR-2) von Goodrich;
- Polyalkylenglycole sowie
- Glycerincarbonat.

### • Ethylenoxidanlagerungsprodukte

Die Anlagerungsprodukte von Ethylenoxid und/oder von Propylenoxid an Fettalkohole, Fettsäuren, Alkylphenole oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgeführt wird, entspricht. C_{12/18-}Fettsäuremono- und -diester von Anlagerungsprodukten von Ethylenoxid an Glycerin sind als Rückfettungsmittel für kosmetische Zubereitungen bekannt.

### • Alkyl- und/oder Alkenyloligoglykoside

Alkyl- und/oder Alkenyloligoglycoside, ihre Herstellung und ihre Verwendung sind aus dem Stand der Technik bekannt. Ihre Herstellung erfolgt insbesondere durch Umsetzung von Glucose oder Oligosacchariden mit primären Alkoholen mit 8 bis 18 Kohlenstoffatomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

### • Partialglyceride

Typische Beispiele für geeignete Partialglyceride sind Hydroxystearinsäuremonoglycerid, Hydroxystearinsäurediglycerid, Isostearinsäuremonoglycerid, Isostearinsäurediglycerid, Ölsäuremonoglycerid, Ölsäurediglycerid, Ricinolsäuremoglycerid, Ricinolsäurediglycerid, Linolsäuremonoglycerid, Linolsäurediglycerid, Linolensäuremonoglycerid, Linolensäurediglycerid, Erucasäuremonoglycerid, Erucasäurediglycerid, Weinsäuremonoglycerid, Weinsäurediglycerid, Citronensäuremonoglycerid, Citronendiglycerid, Äpfelsäuremonoglycerid, Äpfelsäurediglycerid sowie deren technische Gemische, die untergeordnet aus dem Herstellungsprozeß noch geringe Mengen an Triglycerid enthalten können. Ebenfalls geeignet sind Anlagerungsprodukte von 1 bis 30, vorzugsweise 5 bis 10 Mol Ethylenoxid an die genannten Partialglyceride.

### • Sorbitanester

Als Sorbitanester kommen Sorbitanmonoisostearat, Sorbitansesquiisostearat, Sorbitandiisostearat, Sorbitantriisostearat, Sorbitanmonooleat, Sorbitansesquioleat, Sorbitandioleat, Sorbitantrioleat, Sorbitanmonoerucat, Sorbitansesquierucat, Sorbitandierucat, Sorbitantrierucat, Sorbitanmonoricinoleat, Sorbitansesquiricinoleat, Sorbitandiricinoleat, Sorbitantriricinoleat, Sorbitanmonohydroxystearat, Sorbitansesquihydroxystearat, Sorbitandihydroxystearat, Sorbitantrihydroxystearat, Sorbitanmonotartrat, Sorbitansesquitartrat, Sorbitanditartrat, Sorbitantritartrat, Sorbitanmonocitrat, Sorbitansesquicitrat, Sorbitandicitrat, Sorbitantricitrat, Sorbitanmonomaleat, Sorbitansesquimaleat, Sorbitandimaleat, Sorbitantrimaleat sowie deren technische Gemische. Ebenfalls geeignet sind Anlagerungsprodukte von 1 bis 30, vorzugsweise 5 bis 10 Mol Ethylenoxid an die genannten Sorbitanester.

### • Polyglycerinester

Typische Beispiele für geeignete Polyglycerinester sind Polyglyceryl-2 Dipolyhydroxystearate (Dehymuls® PGPH), Polyglycerin-3-Diisostearate (Lameform® TGI), Polyglyceryl-4 Isostearate (Isolan® GI 34), Polyglyceryl-3 Oleate, Diisostearoyl Polyglyceryl-3 Diisostearate (Isolan® PDI), Polyglyceryl-3 Methylglucose Distearate (Tego Care@ 450), Polyglyceryl-3 Beeswax (Cera Bellina®), Polyglyceryl-4 Caprate (Polyglycerol Caprate T2010/90), Polyglyceryl-3 Cetyl Ether (Chimexane® NL), Polyglyceryl-3 Distearate (Cremophor® GS 32) und Polyglyceryl Polyricinoleate (Admul® WOL 1403) Polyglyceryl Dimerate Isostearate sowie deren Gemische. Beispiele für weitere geeignete Polyolester sind die gegebenenfalls mit 1 bis 30 Mol Ethylenoxid umgesetzten Mono-, Di- und Triester von Trimethylolpropan oder Pentaerythrit mit Laurinsäure, Kokosfettsäure, Talgfettsäure, Palmitinsäure, Stearinsäure, Ölsäure, Behensäure und dergleichen.

### • Anionische Emulgatoren

Typische anionische Emulgatoren sind aliphatische Fettsäuren mit 12 bis 22 Kohlenstoffatomen, wie beispielsweise Palmitinsäure, Stearinsäure oder Behensäure, sowie Dicarbonsäuren mit 12 bis 22 Kohlenstoffatomen, wie beispielsweise Azelainsäure oder Sebacinsäure.

### • Amphotere und kationische Emulgatoren

Weiterhin können als Emulgatoren zwitterionische Tenside verwendet werden. Als zwitterionische Tenside werden solche oberflächenaktiven Verbindungen bezeichnet, die im Molekül mindestens eine quartäre Ammoniumgruppe und mindestens eine Carboxylat- und eine Sulfonatgruppe tragen. Besonders geeignete zwitterionische Tenside sind die sogenannten Betaine wie die N-Alkyl-N,N-dimethylammoniumglycinate, beispielsweise das Kokosalkyldimethylammoniumglycinat, N-Acylaminopropyl-N,N-dimethylammo-niumglycinate, beispielsweise das Kokosacylaminopropyldimethyl-ammoniumglycinat, und 2-Alkyl-3-carboxylmethyl-3-hydroxyethylimidazoline mit jeweils 8 bis 18 C-Atomen in der Alkyl- oder Acylgruppe sowie das Kokosacylaminoethylhydroxyethylcarboxymethylglycinat. Besonders bevorzugt ist das unter der CTFA-Bezeichnung *Cocamidopropyl Betaine* bekannte Fettsäureamid-Derivat. Ebenfalls geeignete Emulgatoren sind ampholytische Tenside. Unter ampholytischen Tensiden werden solche oberflächenaktiven Verbindungen verstanden, die außer einer C_{8/18}-Alkyl- oder Acylgruppe im Molekül mindestens eine freie Aminogruppe und mindestens eine -COOH- oder -SO₃H-Gruppe enthalten und zur Ausbildung innerer Salze befähigt sind. Beispiele für geeignete ampholytische Tenside sind N-Alkylglycine, N-Alkylpropionsäuren, N-Alkylaminobuttersäuren, N-Alkyliminodipropionsäuren, N-Hydroxyethyl-N-alkylamidopropylglycine, N-Alkyltaurine, N-Alkylsarcosine, 2-Alkylaminopropionsäuren und Alkylaminoessigsäuren mit jeweils etwa 8 bis 18 C-Atomen in der Alkylgruppe.. Besonders bevorzugte ampholytische Tenside sind das N-Kokosalkylaminopropionat, das Kokosacylaminoethylaminopropionat und das C_{12/18}-Acylsarcosin. Schließlich kommen auch Kationtenside als Emulgatoren in Betracht, wobei solche vom Typ der Esterquats, vorzugsweise methylquaternierte Difettsäuretriethanolaminester-Salze, besonders bevorzugt sind.

### Beschreibung des Herstellungsweges

Vorzugsweise wird zur Herstellung der Dispersionen zunächst bei Umgebungstemperatur eine Zubereitung aus Ölkörper und Emulgator hergestellt. Bezogen auf die Ölphase kann der Emulgator dabei in Mengen von 0,5 bis 10, vorzugsweise 1 bis 5 und insbesondere 1,5 bis 2 Gew.-% vorhanden sein. In die zu erhaltene Ölphase wird dann eine wässrige Zubereitung getropft, welche die Gelatine und den Wirkstoff bzw. die Wirkstoffe enthält. Der Gehalt an Gelatine und Wirkstoffen liegt dabei üblicherweise jeweils in der Größenordnung - bezogen auf die wässrige Phase - von 1 bis 50, vorzugsweise 10 bis 40 und insbesondere 15 bis 25 Gew.-%. Die Temperatur der wässrigen Phase ist ausreichend, um die Gelatine zu schmelzen und liegt dabei üblicherweise im Bereich von 50 bis 90 °C. Das Einbringen in die Ölphase erfolgt in der Regel durch Eintropfen, wobei das Mengenverhältnis zwischen wässriger und öliger Phase im Bereich von 10 : 90 bis 50 : 50 variieren kann. Um die Verkapselung zu fördern und Teilchenagglomeration zu verhindern, empfiehlt es sich, die Zubereitung stark zu rühren, beispielsweise mit 500 bis 1.000 Upm und unter den Schmelzpunkt der Gelatine zu kühlen, also beispielsweise durch ein Eisbad auf Temperaturen von 5 bis 10 °C. Im Anschluss wird den Zubereitungen ein Vernetzungsmittel zugesetzt. Dieser Schritt ist an sich nicht zwingend, es hat sich aber erwiesen, dass die damit durchgeführte Härtung der Kapseln die Meerwasserbeständigkeit deutlich verbessert. Als Vernetzungsmittel, die mit der Proteinmatrix der Gelatinekapsel abreagieren können, kommen in erster Linie kurzkettige aliphatische Aldehyde wie beispielsweise Formaldehyd oder insbesondere Glutaraldehyd in Frage. Die Einsatzmenge der Vernetzer liegt typisch bei 0,5 bis 2 Gew.-% - bezogen auf die Gesamtzubereitung. Die Vernetzung als solche kann bei Raumtemperatur stattfinden und benötigt je nach gewünschtem Härtungserfolg zwischen 1 und 24 h.

Nachdem die Wirkstoffe nun verkapselt vorliegen und die Kapseln selbst gehärtet wurden, erfolgt als nächstes die Abtrennung der Ölphase und die Redispergierung im organischen Lösemittel. Auch diese beiden Schritte sind an sich nicht zwingend, d.h. grundsätzlich ist es auch möglich, die Vertropfung der wässrigen Phase direkt in das organische Lösemittel durchzuführen oder aber auf eine Redispergierung im organischen Lösemittel zu verzichten und die Mikrokapseln in der Ölphase in die Anstrichfarben einzubringen. In der Praxis setzt man der Ölphase bei der Verkapselung sogar eine geringe Menge des späteren Lösemittels zu. Allerdings hat es sich erwiesen, dass die Vertropfung in die organischen Lösemittel trotz starker Scherung leicht zur Agglomeration und zur Bildung unregelmäßig geformter oder nicht ausreichend verkapselter Aggregate führt. Umgekehrt besteht aus Sicht des Handels die Anforderung, nur solche Dispersionen einzusetzen, deren Lösemittel auch ohnehin in den gängigen Anstrichmitteln enthalten sind. Die typische Zusatzmenge der Dispersionen zu den Farben liegt bei 5 bis 50, vorzugsweise 10 bis 40 und insbesondere 15 bis 25 Gew.-%.

### Gewerbliche Anwendbarkeit

Die erfindungsgemäßen Dispersionen eignen sich in besonderer Weise dazu, Anstrichmittel so auszurüsten, dass diese den damit behandelten Werkstoffen einen verbesserten Schutz sowohl gegen Mikroorganismen als auch Korrosionsfaktoren bieten. Ein weiterer Gegenstand der vorliegenden Erfindung besteht folglich in der Verwendung der Dispersionen zur Herstellung von Anstrichmitteln, vorzugsweise solchen, die für den Einsatz unter Wasser und dabei speziell Meerwasser bestimmt sind, wobei der Gehalt der Dispersionen an den Anstrichmitteln 1 bis 50, vorzugsweise 5 bis 30 und insbesondere 10 bis 20 Gew.-% betragen kann. Ein weiterer Aspekt der Erfindung betrifft die Verwendung der Dispersionen zur Behandlung bzw. Ausrüstung von Werkstoffen, wie beispielsweise Holz, Stahl, Beton oder stahlarmiertem Beton, beispielsweise durch Imprägnierung, Beschichtung oder Zugabe, speziell zum Schutz gegen Fouling und/oder Korrosion.

### Beispiele

### Allgemeine Herstellvorschrift

In einer 100-ml-Rührapparatur wurden 3 g Gelatine und 2 g Kupfer(II)oxid vorgelegt, mit 17 ml Wasser versetzt (Phase A) und bei einer Temperatur von 65 bis 70 °C solange gerührt, bis eine homogene Suspension vorlag. In einer zweiten 500-ml-Rührapparatur wurden 80 g eines Ölkörpers bei 20 °C mit einem Emulgator versetzt (Phase B). Anschließend wurde die wässrige, heiße Suspension in die Ölphase eingerührt und diese dann nach ca. 1 min in einem Eisbad über 45 min auf ca. 10 °C abgekühlt, wobei das Kupferoxid in einer Gelatinematrix verkapselt wurde. Der Ölphase mit den darin enthaltenen Mikrokapseln wurde danach zur Vernetzung 1 g Glutaraldehyd (Phase C) sowie 30 ml Xylol zugesetzt. Die Zubereitung wurde über Nacht ruhen gelassen und am nächsten Tag durch Dekantieren von der Ölphase befreit. Anschließend erfolgte die erneute Suspendierung der Mikrokapseln in Xylol. Die Einzelheiten zur Herstellung der Mikrokapseln nach den Beispielen 1 bis 6 sind in der nachfolgenden Tabelle 1 zusammengefasst.

**Tabelle 1 Herstellung von mikroverkapselten CuO-Pigmenten**

| **Phase** | **Komponente** | **1** | **2** | **3** | **4** | **5** | **6** |
|---|---|---|---|---|---|---|---|
| A | Gelatine | 3,0 | | | | | |
| | CuO | 2,0 | | | | | |
| | **Texamin® KE 3160** | 0,4 | | | | | |
| | Coco monoethanolamide | | | | | | |
| | Wasser | 17,0 | | | | | |
| B | **Spindle^{®} 90** | 80,0 | - | - | 80,0 | - | 80,0 |
| | Mineral oil | | | | | | |
| | **Cetiol® 868** | - | - | - | - | 80,0 | - |
| | 2-Ethylhexyloctadecanoate | | | | | | |
| | **Dub-Mi** | - | 80,0 | - | - | - | - |
| | Mineral oil | | | | | | |
| | **Cileno** | - | - | 80,0 | - | - | - |
| | Mineral oil | | | | | | |
| | **Dehymuls^{®} HRE7** | - | 1,0 | - | - | - | - |
| | PEG7 Hydrogenated Castor Oil | | | | | | |
| | **Dehymuls^{®} PGPH** | - | - | 0,5 | - | - | - |
| | Dipolyglycerol Polyhydroxystearate | | | | | | |
| | **Span^{®} 80** | 1,5 | - | 0,5 | 1,5 | 1,5 | 1,5 |
| | Sorbitan monooleate | | | | | | |
| C | Glutaraldehyd | 1,0 | | | | | |
| Rührgeschwindigkeit [Upm] | | 1000 | 600 | 400 | 600 | 600 | 400 |
| Teilchendurchmesser [micras] | | 30 | 40 | 40 | 40 | 100 | 100 |

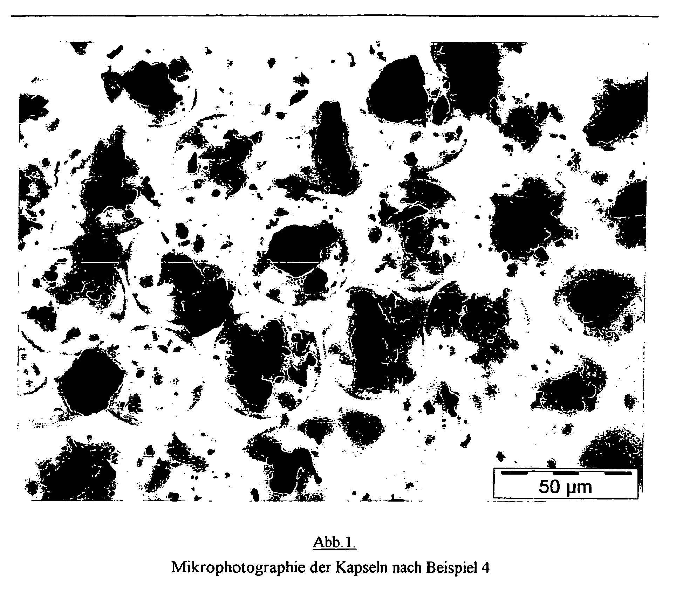

## Patentansprüche

1. Dispersionen, enthaltend
(a) in einer Gelatinematrix mikroverkapselte Anti-Foulingwirkstoffe und
(b) organische Lösemittel.

2. Dispersionen nach Anspruch 1, **dadurch gekennzeichnet, dass** sie Mikrokapseln enthalten, die einen mittleren Durchmesser von 10 bis 150 micras (= 0,1 bis 1,5 mm) aufweisen.

3. Dispersionen nach einem der Ansprüche 1 und/oder 2, **dadurch gekennzeichnet, dass** sie als Anti-Foulingwirkstoffe anorganische Salze bzw. Pigmente und/oder metallorganische Verbindungen enthalten.

4. Dispersionen nach mindestens einem der Ansprüche 1 bis 3, **dadurch gekennzeichnet, dass** sie als Anti-Foulingwirkstoffe Oxide des Kupfers und/oder Eisens enthalten.

5. Dispersionen nach mindestens einem der Ansprüche 1 bis 4, **dadurch gekennzeichnet, dass** sie Mikrokapseln enthalten, die als weitere Wirkstoffe einen Gehalt an Korrosionsinhibitoren aufweisen.

6. Dispersionen nach mindestens einem der Ansprüche 1 bis 5, **dadurch gekennzeichnet, dass** sie organische Lösemittel enthalten, die ausgewählt sind aus der Gruppe, die gebildet wird von aliphatischen, cycloaliphatischen und aromatischen Kohlenwasserstoffen.

7. Dispersionen nach mindestens einem der Ansprüche 1 bis 6, **dadurch gekennzeichnet, dass** sie die mikroverkapselten Wirkstoffe und die organischen Lösemittel im Gewichtsverhältnis 10 : 90 bis 90 : 10 enthalten.

8. Verfahren zur Herstellung von Dispersionen mikroverkapselter Wirkstoffe, bei dem man
(a) bei Umgebungstemperatur eine erste Zubereitung aus einem Ölkörper und einem Emulgator herstellt,
(b) bei einer Temperatur im Bereich von 50 bis 100 °C eine zweite wässrige Zubereitung aus Gelatine und den Wirkstoffen herstellt,
(c) die wässrige zweite Zubereitung unter starker Scherung in die erste ölhaltige Zubereitung tropft und anschließend unter den Schmelzpunkt der Gelatine abkühlt,
(d) den resultierenden Mikrokapselzubereitungen ein Vernetzungsmittel zusetzt,
(e) die Ölphase abtrennt und schließlich
(f) die resultierenden Mikrokapseln in einem organischen Lösungsmittel redispergiert.

9. Verwendung von Dispersionen nach Anspruch 1 zur Herstellung von Anstrichmitteln.

10. Verwendung von Dispersionen nach Anspruch 1 zur Ausrüstung oder Behandlung von Werkstoffen.

## Claims

1. Dispersions containing
(a) anti-fouling components microencapsulated in a gelatin matrix and
(b) organic solvents.

2. Dispersions as claimed in claim 1, **characterized in that** they contain microcapsules with a mean diameter of 10 to 150 micras (= 0.1 to 1.5 mm).

3. Dispersions as claimed in any of claims 1 and/or 2, **characterized in that** they contain inorganic salts or pigments and/or organometallic compounds as anti-fouling components.

4. Dispersions ass claimed in at least one of claims 1 to 3, **characterized in that** they contain oxides of copper and/or iron as anti-fouling components.

5. Dispersions as claimed in at least one of claims 1 to 4, **characterized in that** they contain microcapsules in which corrosion inhibitors are present as further active components.

6. Dispersions as claimed in at least one of claims 1 to 5, **characterized in that** they contain organic solvents selected from the group consisting of aliphatic, cycloaliphatic and aromatic hydrocarbons.

7. Dispersions as claimed in at least one of claims 1 to 6, **characterized in that** they contain the microencapsulated active components and the organic solvents in a ratio by weight of 10:90 to 90:10.

8. A process for the production of dispersions of microencapsulated active components comprising the steps of
(a) preparing a first preparation of an oil component and an emulsifier at ambient temperature,
(b) preparing a second aqueous preparation of gelatin and the active components at a temperature in the range from 50 to 100°C,
(c) adding the aqueous second preparation dropwise to the first oil-containing preparation with intensive shearing and then cooling to below the melting point of the gelatin,
(d) adding a crosslinking agent to the microcapsule preparations thus obtained,
(e) removing the oil phase and, finally,
(f) redispersing the resulting microcapsules in an organic solvent.

9. The use of the dispersions claimed in claim 1 for the production of paints.

10. The use of the dispersions claimed in claim 1 for finishing or treating materials.

## Revendications

1. Dispersions contenant :
(a) des agents actifs anti-fouling microencapsulés dans une matrice de gélatine, et
(b) des solvants organiques.

2. Dispersions selon la revendication 1,
**caractérisées en ce qu'**
elles contiennent des microcapsules ayant un diamètre moyen de 10 à 150 micras (0,1 à 1,5 mm).

3. Dispersions selon l'une des revendications 1 et/ou 2,
**caractérisées en ce que**
en tant qu'agents actifs anti-fouling, elles contiennent, des sels ou pigments inorganiques et/ou des composés organométalliques.

4. Dispersions selon au moins l'une quelconque des revendications 1 à 3,
**caractérisées en ce que**
en tant qu'agents actifs anti-fouling, elles contiennent, des oxydes de cuivre et/ou de fer.

5. Dispersions selon au moins l'une des revendications 1 à 4,
**caractérisées en ce qu'**
elles contiennent des microcapsules renferment, des inhibiteurs de corrosion constituant d'autre agents actifs.

6. Dispersions selon au moins l'une des revendications 1 à 5,
**caractérisées en ce qu'**
elles contiennent des solvants organiques choisis dans le groupe formé d'hydrocarbures aliphatiques, cycloaliphatiques et aromatiques.

7. Dispersions selon au moins l'une des revendications 1 à 6,
**caractérisées en ce qu'**
elles contiennent les agents actifs microencapsulés et les solvants organiques dans un rapport pondéral de 10:90 à 90: 10.

8. Procédé de préparation de dispersions d'agents actifs microencapsulés, selon lequel
(a) on prépare une première préparation, à la température ambiante, à partir d'un corps huileux et d'un émulsifiant,
(b) on prépare, une deuxième préparation aqueuse à une température de l'ordre de 50 à 100°C, à partir de gélatine et des agents actifs,
(c) on verse goutte à goutte la deuxième préparation aqueuse dans la première préparation huileuse sous fort cisaillement puis on fait refroidir ce mélange au-dessous du point de fusion de la gélatine,
(d) on ajoute un agent de réticulation aux préparations pour microcapsules résultantes,
(e) on sépare la phase huileuse et enfin
(f) on re-disperse les microcapsules résultantes dans un solvant organique.

9. Utilisation de dispersions selon la revendication 1, pour la préaration d'agents de peinture.

10. Utilisation de dispersions selon la revendication 1, pour apprêter ou traiter des matériaux.
